# EUROPÄISCHE PATENTSCHRIFT

(11) **EP 3 657 386 B1**
(45) Veröffentlichungstag und Bekanntmachung des Hinweises auf die Patenterteilung: **08.11.2023**
(21) Anmeldenummer: 19208082.8
(22) Anmeldetag: 08.11.2019
(51) Int. Cl.: G06V 10/75, G06V 20/58, B60W 30/09, B60W 30/095, B60W 60/00, G06N 5/02

(54) **VERFAHREN UND SYSTEM ZUM UNTERSTÜTZEN EINES AUTOMATISIERT FAHRENDEN FAHRZEUGS**
METHOD AND SYSTEM FOR SUPPORTING AN AUTOMATED MOVING VEHICLE
PROCÉDÉ ET SYSTÈME D'AIDE À LA CONDUITE D'UN VÉHICULE AUTOMATISÉ

(30) Priorität: 22.11.2018 DE 102018219984
(43) Veröffentlichungstag der Anmeldung: 27.05.2020
(73) Patentinhaber: Volkswagen AG, 38440 Wolfsburg (DE)
(72) Erfinder: Homoceanu, Silviu, 38118 Braunschweig (DE)

(56) Entgegenhaltungen:
- US-A1- 2018 188 738
- US-A1- 2018 217 607
- US-B1- 8 855 849
- JIA DENG ET AL: "ImageNet: A large-scale hierarchical image database", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20. Juni 2009 (2009-06-20), Seiten 248-255, XP031514483, ISBN: 978-1-4244-3992-8
- ESCAMILLA-AMBROSIO P J ET AL: "Fuzzy Logic Obstacle Identity Declaration and Fusion in the Autotaxi System", FUZZY SYSTEMS CONFERENCE, 2007. FUZZ-IEEE 2007. IEEE INTERNATIONAL, IEEE, PI, Juni 2007 (2007-06), Seiten 1-6, XP031130023, ISBN: 978-1-4244-1209-9

## Beschreibung

Die Erfindung betrifft ein Verfahren und ein System zum Unterstützen eines automatisiert fahrenden Fahrzeugs.

Seltene Ereignisse (engl. "corner cases"), insbesondere das Auftreten von unbekannten Objekten in einem Umfeld, stellen eine große Herausforderung für automatisiert fahrende Fahrzeuge dar. Der Grund hierfür ist, dass es mit algorithmischen Verfahren oder mit auf Künstlicher Intelligenz basierenden Verfahren aufgrund der großen Anzahl von Objekten, die in einem beliebigen Umfeld angetroffen werden können, nicht möglich ist, alle Objekte zu erkennen. Daher treten immer wieder Situationen auf, in denen im Umfeld des Fahrzeugs Objekte vorhanden sind, die nicht erkannt werden. Derartige Objekte können z.B. Tiere, Personen auf einer Fahrbahn, Laubansammlungen oder sonstige, im Verkehr in der Regel nicht oder nur selten anzutreffende Objekte sein. In einer solchen Situation stoppt das Fahrzeug üblicherweise die automatisierte Fahrt und wartet auf eine Handlungsanweisung eines menschlichen Fahrers.

Aus der DE 10 2015 006 255 T5 ist eine Objekterkennungsvorrichtung bekannt. Diese enthält eine Erfassungseinheit, die dafür konfiguriert ist, ein Erkennungszielbild zu erfassen, das als ein zu erkennendes Objekt dient; eine Abrufeinheit, die dafür konfiguriert ist, eine Bilddatenbank zu durchsuchen, die mehrere Bilddaten in Verbindung mit Tag-Informationen speichert, und ein ähnliches Bild abzurufen, das mit dem Erkennungszielbild übereinstimmt; und eine Erkennungseinheit, die dafür konfiguriert ist, das in dem Erkennungszielbild enthaltene Objekt auf der Basis von Tag-Informationen zu erkennen, die mit einem ähnlichen Bild verknüpft sind, das durch die Abrufeinheit erhalten wurde. Die Erkennung kann die Tag-Informationen, die unter den Tag-Informationen, die mit dem ähnlichen Bild verknüpft sind, am häufigsten auftreten, als ein Erkennungsergebnis auswählen. Die Erkennungseinheit kann außerdem eine Tag-Informationen-Zuverlässigkeitswertung des ähnlichen Bildes in dem Abrufergebnis berechnen und ein Objekt unter Berücksichtigung der Zuverlässigkeitswertung erkennen.

Aus der US 2018/0217607 A1 ist ein System zum Erkennen von Objekten bekannt. Hierbei werden Objekte in erfassten Sensordaten auf Grundlage von einer Straßenobjektdatenbank, einer Bildmerkmalsdatenbank und/oder einer Internetdatenbank erkannt und beim automatisierten Fahren berücksichtigt.

Aus der DE 10 2009 016 580 A1 sind ein Datenverarbeitungssystem und ein Verfahren zum Bereitstellen mindestens einer Fahrerassistenzfunktion bekannt. Eine stationäre Empfangseinheit zum Empfangen von Bilddaten empfängt mit Hilfe mindestens einer Bilderfassungseinheit eines Fahrzeugs durch Erfassen eines Bildes die Umgebung des Fahrzeugs und erzeugt Bilddaten. Eine stationäre Verarbeitungseinheit verarbeitet zumindest einen Teil der empfangenen Bilddaten, wobei die stationäre Verarbeitungseinheit ausgehend von den Bilddaten Fahrerassistenzdaten mit mindestens einer Fahrerassistenzinformation erzeugt, wobei mit Hilfe der erzeugten Fahrerassistenzinformation mindestens eine Fahrerassistenzfunktion im Fahrzeug erzeugbar ist. Eine Sendeeinheit sendet die Fahrerassistenzdaten zum Fahrzeug.

Aus der DE 10 2012 107 886 A1 ist ein Verfahren zur elektronischen Erkennung von Verkehrszeichen bekannt, bei welchem aus den Bilddaten einer in einem Fahrzeug angeordneten Kamera verkehrszeichentypische Grundmuster eines Verkehrszeichens erkannt werden, wobei vorgesehen ist, dass über eine Kommunikationseinrichtung des Fahrzeugs zum Senden und Empfangen von Daten die Daten des erkannten Grundmusters drahtlos an eine externe Servereinheit übermittelt werden, mittels eines Mustererkennungsalgorithmus von der externen Servereinheit eine Mustererkennung durchgeführt wird, und als Ergebnis der Mustererkennung die Daten des erkannten Verkehrszeichens an die Kommunikationseinheit des Fahrzeugs übermittelt werden und insbesondere auf einer Anzeigeeinheit ein entsprechendes Verkehrszeichen dargestellt wird.

Aus der US 9 495 874 B1 sind ein Verfahren und eine Vorrichtung zum Bestimmen eines oder mehrerer Verhaltensmodelle bekannt, die von einem autonomen Fahrzeug verwendet werden, um das Verhalten erfasster Objekte vorherzusagen. Das autonome Fahrzeug kann das Objektverhalten unter Verwendung eines oder mehrerer Sensoren erfassen und aufzeichnen. Das autonome Fahrzeug kann dann das aufgezeichnete Objektverhalten einem Server mitteilen, der die Verhaltensmodelle bestimmt. Der Server kann die Verhaltensmodelle gemäß einer gegebenen Objektklassifikation, von dem Objekt ausgeführten Aktionen von Interesse und der wahrgenommenen Umgebung des Objekts bestimmen.

Aus der US 2018/0188738 A1 sind ein System und ein Verfahren zur dynamischen Objektidentifikation zur Verwendung mit autonomen Fahrzeugen bekannt. Zur effizienten Erfassung von Änderungen im Umfeld für autonome oder teilweise autonome Fahrzeuge können Ausführungsformen eine Technik verwenden, die auf Hintergrundentfernung und Bildsubtraktion basiert und eine Bewegungserkennung anstelle einer vollständigen Objektidentifikation für alle Objekte in einem Bild verwendet. Road Side Units (RSU) in der Nähe eines Straßensegments oder virtuelle RSUs in der Cloud, andere Fahrzeuge oder mobile Geräte (z. B. Drohnen) werden verwendet, um Hintergrundbilder für ein Straßensegment abzurufen und zu speichern, die von dem autonomen Fahrzeug verwendet werden sollen.

Aus Jia Deng et al., ImageNet: A large-scale hierarchical image database, 2009 IEEE Conference on Computer Vision and Pattern Recognition (CVPR 2009), IEEE, 20. Juni 2009, Seiten 248-255, XP031514483, ISBN 978-1-4244-3992-8, ist eine Bilddatenbank bekannt, die eine umfangreiche Ontologie von Bildern auf der Basis der WordNet-Struktur ausbildet.

Ein Umgang mit unbekannten Objekten beim automatisierten Fahren ist derzeit nur unbefriedigend gelöst.

Der Erfindung liegt die Aufgabe zu Grunde, ein Verfahren und System zum Unterstützen eines automatisiert fahrenden Fahrzeugs zu schaffen, bei denen ein Umgang mit unbekannten Objekten im Umfeld des Fahrzeugs verbessert ist.

Die Aufgabe wird erfindungsgemäß durch ein Verfahren mit den Merkmalen des Patentanspruchs 1 und ein System mit den Merkmalen des Patentanspruchs 9 gelöst. Vorteilhafte Ausgestaltungen der Erfindung ergeben sich aus den Unteransprüchen.

Insbesondere wird ein Verfahren zum Unterstützen eines automatisiert fahrenden Fahrzeugs zur Verfügung gestellt, wobei Objekte in einem Umfeld des Fahrzeugs mittels einer Sensorik erfasst werden, und wobei in erfassten Umfelddaten Objekte mittels einer Objekterkennungseinrichtung identifiziert und erkannt werden, wobei bei Vorliegen eines unbekannten Objektes im Umfeld die folgenden Schritte ausgeführt werden:
(a) Aufsuchen des unbekannten Objektes in mindestens einer Datenbank mittels einer Rechercheeinrichtung,
(b) Ermitteln von typischen Eigenschaften des unbekannten Objektes auf Grundlage des Suchergebnisses mittels der Rechercheeinrichtung,
(c) Ableiten einer Handlungsempfehlung für das automatisiert fahrende Fahrzeug auf Grundlage der typischen Eigenschaften des unbekannten Objektes mittels einer Empfehlungseinrichtung,
(d) Bereitstellen der abgeleiteten Handlungsempfehlung.

Ferner wird ein System zum Unterstützen einer automatisierten Fahrt eines Fahrzeugs geschaffen, wobei Objekte in einem Umfeld des Fahrzeugs mittels einer Sensorik erfasst werden, und wobei in erfassten Umfelddaten Objekte mittels einer Objekterkennungseinrichtung identifiziert und erkannt werden, umfassend eine Rechercheeinrichtung und eine Empfehlungseinrichtung, wobei die Rechercheeinrichtung derart ausgebildet ist, bei Vorliegen eines unbekannten Objektes im Umfeld das unbekannte Objekt in mindestens einer Datenbank aufzusuchen und typische Eigenschaften des unbekannten Objektes auf Grundlage des Suchergebnisses zu ermitteln, und wobei die Empfehlungseinrichtung derart ausgebildet ist, eine Handlungsempfehlung für das automatisiert fahrende Fahrzeug auf Grundlage der typischen Eigenschaften abzuleiten und bereitzustellen.

Eine Grundidee der Erfindung ist, ein unbekanntes Objekt zu identifizieren, die zugehörigen Umfelddaten zu isolieren und die isolierten Umfelddaten zu verwenden, um eine Suche in mindestens einer Datenbank mittels einer Rechercheeinrichtung durchzuführen. Hierbei können Merkmale des unbekannten Objektes, wie beispielsweise eine Größe, eine Oberflächeneigenschaft oder sonstige geometrische oder Materialeigenschaften oder auch aus den Umfelddaten abgeleitete Daten, als Suchparameter verwendet werden. Für die Kommunikation mit der mindestens einen Datenbank weist das System die entsprechende(n) Software- und Hardware-Schnittstelle(n) auf. Eine Kommunikation mit der mindestens einen Datenbank kann beispielsweise über eine Internetverbindung erfolgen. Die mindestens eine Datenbank liefert dann ein Suchergebnis, in dem beispielsweise ähnliche Objekte enthalten und/oder vorgeschlagen werden. Das Suchergebnis kann weiter aufbereitet oder zu einer Verfeinerung der Suche verwendet werden. Eine weitere Grundidee der Erfindung ist es, auf Grundlage des Suchergebnisses mittels der Rechercheeinrichtung typische Eigenschaften des unbekannten Objektes zu ermitteln. Typische Eigenschaften bezeichnen hierbei physikalische Eigenschaften des unbekannten Objektes, wie z.B. eine Größe, eine Form, eine Masse, ein Volumen und/oder eine Materialeigenschaft wie eine Materialzusammensetzung, eine Härte, eine Sprödigkeit, eine Elastizität bzw. Verformbarkeit und/oder eine Dichte. Die typischen Eigenschaften werden ebenfalls in einer Datenbank gesucht bzw. aus dieser abgefragt. Die physikalischen Eigenschaften können hierbei auf Grundlage einer kontextbasierten Suche ermittelt werden. Auf Grundlage der ermittelten typischen Eigenschaften, das heißt der physikalischen Eigenschaften, wird eine Handlungsempfehlung für das automatisiert fahrende Fahrzeug mittels einer Empfehlungseinrichtung abgeleitet. Hierbei werden beispielsweise physikalische Modelle verwendet, um auf Grundlage der typischen Eigenschaften eine Reaktion des unbekannten Objektes bei einem Kontakt oder einer Kollision mit dem Fahrzeug abzuschätzen. Je nach Ergebnis dieser Modellbetrachtung wird dann beispielsweise entschieden, ob das unbekannte Objekt umfahren werden muss oder ob das unbekannte Objekt überfahren werden kann.

Der Vorteil der Erfindung ist, dass auf unbekannte Objekte, welche für ein automatisiert fahrendes Fahrzeug ein seltenes Ereignis (corner case) darstellen, verbessert reagiert werden kann. Objekte, die in einer zum automatisierten Fahren trainierten Künstlichen Intelligenz nicht trainiert wurden oder durch einen sonstigen Algorithmus nicht berücksichtigt werden, können dann trotzdem von dem System berücksichtigt werden, ohne dass ein menschlicher Eingriff notwendig ist. Hierdurch wird das automatisierte Fahren verbessert und ein Einsatzbereich automatisiert fahrender Fahrzeuge kann vergrößert werden.

Das Fahrzeug kann insbesondere ein Kraftfahrzeug sein. Das Fahrzeug kann aber auch ein anderes Land-, Luft-, oder Wasserfahrzeugs sein, beispielsweise ein Flugzeug, eine Drohne, ein Transport- oder Lagerroboter oder ein Schiff.

Die Sensorik kann im Prinzip beliebig ausgebildet sein. Insbesondere kann die Sensorik mindestens eine Kamera und/oder eine Light Detection and Ranging-(LIDAR)-Sensorik und/oder eine Ultraschallsensorik und/oder eine Radarsensorik umfassen. Es kann vorgesehen sein, dass das System die Sensorik umfasst. Alternativ kann jedoch auch vorgesehen sein, dass das System die Sensorik nicht umfasst, sondern dass diese Teil des Fahrzeugs ist.

Die Objekterkennungseinrichtung identifiziert und erkennt Objekte im Umfeld des Fahrzeugs. Hierbei ist insbesondere vorgesehen, dass Merkmale von identifizierten Objekten bestimmt werden, wie beispielsweise eine Größe, eine Form, eine Oberflächenbeschaffenheit, ein Reflexions- und/oder Remissions- und/oder Transmissionsvermögen etc. Auf Grundlage dieser Merkmale führt die Objekterkennungseinrichtung eine Objekterkennung durch. Im Falle unbekannter Objekte (corner cases) kann die Objekterkennungseinrichtung das Objekt zwar identifizieren, d.h. es wird ein Objekt im Umfeld festgestellt, jedoch kann die Objekterkennungseinrichtung das Objekt nicht erkennen, beispielsweise weil das unbekannte Objekt in einem vorherigen Training einer Künstlichen Intelligenz der Objekterkennungseinrichtung nicht trainiert wurde. Nach dem Identifizieren des unbekannten Objektes isoliert die Objekterkennungseinrichtung die zugehörigen Umfelddaten und stellt diese der Rechercheeinrichtung bereit. Es kann insbesondere vorgesehen sein, dass das System die Objekterkennungseinrichtung umfasst. Alternativ kann das System die Objekterkennungseinrichtung aber auch nicht umfassen, sodass die Objekterkennungseinrichtung beispielsweise als ein Teil des Fahrzeugs ausgebildet ist und die zum unbekannten Objekt zugehörigen Umfelddaten dem System bereitstellt.

In einer Ausführungsform des Systems ist vorgesehen, dass das System eine Erkennungseinrichtung umfasst, wobei die Erkennungseinrichtung derart ausgebildet ist, in den erfassten Umfelddaten unbekannte Objekte zu identifizieren, zugehörige Umfelddaten zu extrahieren und die extrahierten Umfelddaten der Rechercheeinrichtung bereitzustellen. Weist das System auch die Objekterkennungseinrichtung auf, so kann die Erkennungseinrichtung Teil der Objekterkennungseinrichtung sein.

Erfindungsgemäß ist vorgesehen, dass das Aufsuchen des unbekannten Objektes auf Grundlage bildbasierter Umfelddaten in einer Bilddatenbank durchgeführt wird. In der Bilddatenbank sollen hierbei insbesondere Bilder mit einer Beschreibung in Textform hinterlegt sein. Die Sensorik umfasst in diesem Fall eine Kamera, welche Bilddaten als Umfelddaten erfasst. Die Suche in der Bilddatenbank erfolgt insbesondere auf Grundlage eines Bildindex, d.h. die Bilddatenbank stellt einen vorindizierten Raum dar, der von einzelnen Dimensionen aus Bildmerkmalen aufgespannt wird. Diese Bildmerkmale sind insbesondere Low-level-Merkmale, wie beispielsweise Muster, Farben und/oder Farbverläufe in den hinterlegten Bildern etc. Die Suche erfolgt hierbei mittels einer Distanzmetrik, welche eine Distanz der zu dem unbekannten Objekt zugehörigen Bilddaten zu einzelnen Datensätzen in der Bilddatenbank misst. Objekte, deren Bilddaten dem unbekannten Objekt ähnlich sind, weisen eine geringere Distanz in dieser Distanzmetrik auf als Objekte, die dem unbekannten Objekte unähnlich sind. Als Suchergebnis liefert die Suche in der Bilddatenbank dementsprechend Objekte mit der geringsten Distanz, das heißt Objekte, die dem unbekannten Objekt am ähnlichsten sind. Handelt es sich beispielsweise bei dem unbekannten Objekt um eine auf einer Fahrbahnoberfläche liegende Plastiktüte, so wird die Suche in der Bilddatenbank als Suchergebnis Plastiktüten liefern, die der Plastiktüte hinsichtlich eines optischen Erscheinungsbildes ähnlich sind. Eine öffentlich zugängliche Bilddatenbank, in der ähnliche Bilder von Objekten gesucht werden können, stellt beispielsweise "Google images" (https://images.google.de/) bereit.

In einer weiterbildenden Ausführungsform ist vorgesehen, dass das Aufsuchen ein Extrahieren von Metadaten auf Grundlage des aus der Bilddatenbank bereitgestellten Suchergebnisses umfasst. Das von der Bilddatenbank gelieferte Suchergebnis weist insbesondere mit Begriffen versehene Bilder von Objekten auf, die dem unbekannten Objekt ähnlich sind. Diese Begriffe beschreiben die auf den Bildern dargestellten Objekte und sind in der Regel in Form von Metadaten, d.h. als Bildunterschrift oder Tag etc., mit dem jeweiligen Bild verknüpft. Die Begriffe (bei einer Plastiktüte z.B. der Begriff "leere /volle Plastiktüte") werden von der Rechercheeinrichtung extrahiert. Im Ergebnis stehen dann zu dem unbekannten Objekt eine Reihe von Begriffen zur Verfügung, die zumindest ein dem unbekannten Objekt ähnliches Objekt beschreiben.

In einer weiteren weiterbildenden Ausführungsform ist vorgesehen, dass auf Grundlage der extrahierten Metadaten ein das unbekannte Objekt beschreibendes Begriffsnetz (engl. "wordnet", vgl. z.B. https://wordnet.princeton.edu) erstellt wird. Dies kann insbesondere auf Grundlage von Wörterbüchern erfolgen, in denen Begriffe, die den aus den Metadaten extrahierten Begriffen ähnlich bzw. äquivalent sind, gesucht und gesammelt werden können. Dieses Begriffsnetz wird anschließend beim Ermitteln der typischen Eigenschaften verwendet.

Der Vorteil ist, dass das unbekannte Objekt umfangreicher und vielseitiger beschrieben werden kann.

In einer weiteren Ausführungsform ist vorgesehen, dass das Ermitteln der typischen Eigenschaften eine Suche in einer maschinenlesbaren Datenbank umfasst, in der miteinander verlinkte Daten hinterlegt sind. Dies erfolgt insbesondere auf Grundlage der extrahierten Metadaten bzw. der in den Metadaten enthaltenen Begriffen. Insbesondere soll das Ermitteln eine Suche in einer frei verfügbaren maschinenlesbaren Datenbank umfassen, beispielsweise auf der Grundlage von Linked Open Data (vgl. z.B. "The Linked Open Data Cloud", https://lod-cloud.net/). Hierbei sind einzelne Daten miteinander verknüpft hinterlegt, beispielsweise auf Grundlage des Resource Description Framework (RDF), d.h. in Form von RDF-Graphen. Insbesondere sind beispielsweise Objekte als einzelne Entitäten mit ihren Eigenschaften (Prädikaten) verknüpft, sodass diese Eigenschaften über das entsprechende Objekt ermittelt und abgefragt werden können.

In einer Ausführungsform ist vorgesehen, dass das Ermitteln der typischen Eigenschaften eine Suche in einem Wissensbasierten System umfasst. Ein Wissensbasiertes System (engl. Knowledge-based System) ist ein Informationssystem, in dem Wissen über eine Wissensrepräsentation und Wissensmodellierung abgebildet ist. Einfach ausgedrückt werden einzelnen Objekten ("things") in strukturierter Weise Fakten ("facts") zugeordnet. Hierbei handelt es sich insbesondere um eine taxonomische Einordnung, das heißt es erfolgt eine hierarchische Klasseneinteilung eines Themenbereiches. Durch diese "Ontotogien" ist es möglich, den Sinn von Begriffen zu extrahieren und mit einem jeweiligen Kontext in Beziehung zu setzen. Auch hier kann zum Strukturieren der bereits erwähnte RDF-Standard verwendet werden. Als Wissensbasiertes System kann beispielsweise das frei verfügbare DBpedia (https://wiki.dbpedia.org/) verwendet werden, in dem Wissen aus der Online-Enzyklopädie Wikipedia in strukturierter und maschinenlesbarer Form hinterlegt ist.

In einer weiteren Ausführungsform ist vorgesehen, dass das Ermitteln der typischen Eigenschaften eine Suche in unstrukturierten Daten umfasst. Unstrukturierte Daten können insbesondere in Form eines unstrukturierten Dokuments vorliegen, beispielsweise in Form eines Fließtextes, der nicht in einer maschinenlesbaren Form kodiert ist. Auch ein unstrukturierter Text kann jedoch wertvolle Informationen zu den typischen Eigenschaften des unbekannten Objektes liefern. Hat der unstrukturierte Text beispielsweise das unbekannte Objekt bzw. einen dieses in äquivalenter Weise beschreibenden Begriff zum Inhalt, so können bei einer Beschreibung von Eigenschaften üblicherweise verwendete Formulierungen im Text gesucht und ausgewertet werden (z.B. "X hat..." oder "X ist...") und hieraus typische Eigenschaften des unbekannten Objektes abgeleitet werden.

In einer weiteren Ausführungsform ist vorgesehen, dass das Ermitteln der typischen Eigenschaften auf Grundlage von vorgegebenen relevanten Eigenschaften erfolgt. Hierdurch wird erreicht, dass nur für die nachfolgende Handlungsempfehlung relevante Eigenschaften betrachtet werden und ein Such- und Auswerteaufwand reduziert werden kann. Relevante Eigenschaften sind hierbei insbesondere physikalische Eigenschaften, die im Hinblick auf einen Kontakt oder eine Kollision des unbekannten Objekts mit dem Fahrzeug zu beachten sind, umfassend zumindest eine der folgenden: ein Gewicht, eine Größe, ein Material, eine Verformbarkeit. Nicht relevant können z.B. eine Farbe oder ein Aufdruck des unbekannten Objektes sein, da diese in der Regel für die abzuleitende Handlungsempfehlung nicht zu beachten sind. Insbesondere kann eine Liste von relevanten Eigenschaften in der Recherchereinrichtung hinterlegt sein. Die in dieser Liste hinterlegten relevanten Eigenschaften werden dann von der Rechercheeinrichtung in der beschriebenen Weise ermittelt.

Es kann hierbei ferner vorgesehen sein, dass relevante Eigenschaften in Abhängigkeit einer konkreten Situation, in der sich das Fahrzeug beim Auftreten des seltenen Ereignisses (corner case) befindet, definiert sind. Hierzu kann ein weiteres Wissensbasiertes System vorgesehen sein, in der jeweils relevante Eigenschaften für verschiedene Situationen (z.B. Fahren auf einer Straße, Einparken, Fahren in einer Fußgängerzone, Fahren im offenen Gelände abseits einer Straße etc.) hinterlegt sind.

In einer Ausführungsform ist vorgesehen, dass beim Ermitteln der typischen Eigenschaften eine Typikalität für das unbekannte Objekt in Bezug auf die typischen Eigenschaften geschätzt wird, wobei die Handlungsempfehlung zusätzlich auf Grundlage der geschätzten Typikalität abgeleitet wird. Die Typikalität ist hierbei ein Maß dafür, wie gut ein Mitglied einer Kategorie diese Kategorie repräsentiert. Anders ausgedrückt, es wird geschätzt, wie gut die typischen Eigenschaften das unbekannte Objekt beschreiben können. Hierdurch lässt sich das Ableiten der Handlungsempfehlung verbessern, da ein Maß dafür, wie gut die typischen Eigenschaften auf das unbekannte Objekt zutreffen, bereitstellt wird und beim Ableiten der Handlungsempfehlung mit ins Kalkül gezogen werden kann. Die Typikalität wird in Form von Wahrscheinlichkeiten ausgedrückt.

Die beschriebenen Möglichkeiten zum Ermitteln der typischen Eigenschaften liefern insbesondere statistisch verwertbare Ergebnisse, das heißt als Ergebnis werden geschätzte Wahrscheinlichkeiten für das Vorliegen von bestimmten typischen Eigenschaften des unbekannten Objekts geliefert, auf Grundlage derer die Empfehlungseinrichtung eine Handlungsempfehlung ableiten kann.

Teile des Systems können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Systems zum Unterstützen einer automatisierten Fahrt eines Fahrzeugs;
- Fig. 2: ein schematisches Ablaufdiagramm einer Ausführungsform des Verfahrens zum Unterstützen einer automatisierten Fahrt eines Fahrzeugs;
- Fig. 3: ein konkretes Anwendungsbeispiel des Verfahrens zum Unterstützen einer automatisierten Fahrt eines Fahrzeugs.

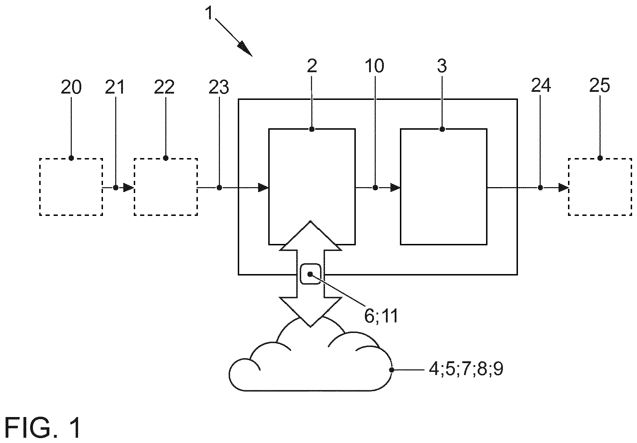

In Fig. 1 ist eine schematische Darstellung einer Ausführungsform des Systems 1 zum Unterstützen einer automatisierten Fahrt eines Fahrzeugs gezeigt. Das System 1 umfasst eine Rechercheeinrichtung 2 und eine Empfehlungseinrichtung 3.

Eine Sensorik 20 erfasst Objekte in einem Umfeld des Fahrzeugs. Die Sensorik 20 umfasst hierbei beispielsweise eine Kamera. In erfassten Umfelddaten 21 werden Objekte mittels einer Objekterkennungseinrichtung 22 identifiziert und erkannt. Es kann in alternativen Ausführungsformen vorgesehen sein, dass das System 1 die Sensorik 20 und die Objekterkennungseinrichtung 22 umfasst.

Kann die Objekterkennungseinrichtung 22 ein identifiziertes, das heißt ein im Umfeld festgestelltes Objekt nicht erkennen, so werden die zugehörigen Umfelddaten 23 der Rechercheeinrichtung 2 zugeführt. Diese Umfelddaten 23 umfassen mittels der Kamera erfasste Bilddaten des unbekannten Objekts.

Die Rechercheeinrichtung 2 sucht dann das unbekannte Objekt in mindestens einer Datenbank 4 auf Grundlage der Bilddaten. Insbesondere ist die mindestens eine Datenbank 4 eine öffentlich zugängliche Datenbank, in der Daten frei verfügbar und abrufbar sind. Die Datenbank 4 ist hierbei eine nach einzelnen Bildmerkmalen indizierte Bilddatenbank 5. Auf Grundlage einer Distanzmetrik werden Bilddaten von Objekten aufgefunden, die dem unbekannten Objekt ähnlich sind. Von diesen ähnlichen Objekten bzw. deren Bilddaten werden von der Rechercheeinrichtung 2 Metadaten 11 extrahiert, insbesondere handelt es sich bei den Metadaten 11 um die ähnlichen Objekte beschreibende Begriffe.

Auf Grundlage des Suchergebnisses 6 der Rechercheeinrichtung, d.h. der extrahierten Metadaten 11, insbesondere der Begriffe, werden von der Rechercheeinrichtung 2 typische Eigenschaften 10 des unbekannten Objektes ermittelt. Die typischen Eigenschaften 10 sind hierbei physikalische Eigenschaften, die auch das unbekannte Objekt aufgrund seiner Ähnlichkeit zu den in der Bilddatenbank aufgefundenen Objekten charakterisieren. Die typischen Eigenschaften 10 werden anschließend der Empfehlungseinrichtung 3 zugeführt.

Die typischen Eigenschaften 10 werden insbesondere mittels einer Suche in einer maschinenlesbaren Datenbank 7 und/oder in einem Wissensbasierten System 8 und/oder in unstrukturierten Daten 9, wie diese beispielsweise auf Webseiten des Internets angetroffen werden, ermittelt.

Die Empfehlungseinrichtung 3 leitet im Anschluss eine Handlungsempfehlung 24 für das automatisiert fahrende Fahrzeug auf Grundlage der typischen Eigenschaften 10 ab. Hierbei werden beispielsweise physikalische Modelle verwendet, um auf Grundlage der typischen Eigenschaften 10 eine Reaktion des unbekannten Objektes bei einem Kontakt oder einer Kollision mit dem Fahrzeug abzuschätzen. Je nach Ergebnis dieser Modellbetrachtung wird dann beispielsweise entschieden, ob das unbekannte Objekt umfahren werden muss oder ob das unbekannte Objekt überfahren werden kann.

Die Handlungsempfehlung 24 wird dann beispielsweise einer Steuerung 25 des Fahrzeugs zugeführt, welche das Fahrzeug auf Grundlage der Handlungsempfehlung 24 automatisiert ansteuert.

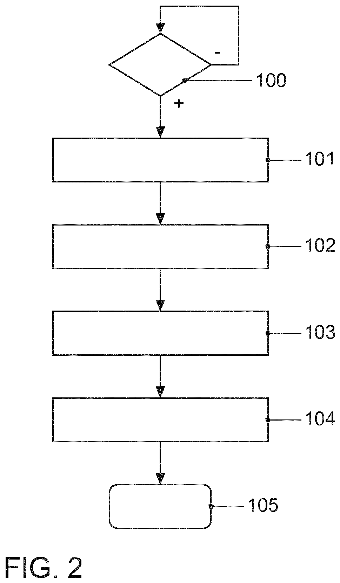

In Fig. 2 ist ein schematisches Ablaufdiagramm des Verfahren zum Unterstützen eines automatisiert fahrenden Fahrzeugs gezeigt.

In einem Verfahrensschritt 100 wird überprüft, ob in von einer Sensorik erfassten Umfelddaten von einer Objekterkennungseinrichtung ein unbekanntes Objekt identifiziert wurde, das heißt, ob ein seltenes Ereignis ("corner case") vorliegt. Ist dies nicht der Fall, wird Verfahrensschritt 100 wiederholt.

Wurde ein unbekanntes Objekt identifiziert, so wird im Verfahrensschritt 101 das unbekannte Objekt in mindestens einer Datenbank mittels einer Rechercheeinrichtung aufgesucht. Dies erfolgt auf Grundlage bildbasierter Umfelddaten in einer Bilddatenbank.

Es kann hierbei vorgesehen sein, dass das Aufsuchen ein Extrahieren von Metadaten auf Grundlage des aus der Bilddatenbank bereitgestellten Suchergebnisses umfasst.

In einem nachfolgenden Verfahrensschritt 102 werden typische Eigenschaften des unbekannten Objektes auf Grundlage des Suchergebnisses mittels der Rechercheeinrichtung ermittelt.

Ferner kann hierbei vorgesehen sein, dass auf Grundlage von extrahierten Metadaten ein das unbekannte Objekt beschreibendes Begriffsnetz erstellt wird, welches die Grundlage für das Ermitteln der typischen Eigenschaften bildet.

Es kann hierbei ferner vorgesehen sein, dass das Ermitteln der typischen Eigenschaften eine Suche in einer maschinenlesbaren Datenbank umfasst, in der miteinander verlinkte Daten hinterlegt sind.

Es kann weiter vorgesehen sein, dass das Ermitteln der typischen Eigenschaften eine Suche in einem Wissensbasierten System umfasst.

Zusätzlich oder alternativ kann vorgesehen sein, dass das Ermitteln der typischen Eigenschaften eine Suche in einem unstrukturierten Dokument umfasst.

Insbesondere kann vorgesehen sein, dass das Ermitteln der typischen Eigenschaften auf Grundlage von vorgegebenen relevanten Eigenschaften erfolgt. Diese vorgegebenen relevanten Eigenschaften sind insbesondere für die Folgen eines Kontakt oder einer Kollision des Fahrzeugs mit dem unbekannten Objekt relevante Eigenschaften, wie beispielsweise eine Größe, eine Masse, eine Verformbarkeit etc. des unbekannten Objekts.

Es kann ferner vorgesehen sein, dass beim Ermitteln der typischen Eigenschaften eine Typikalität für das unbekannte Objekt in Bezug auf die typischen Eigenschaften geschätzt wird.

In einem Verfahrensschritt 103 wird anschließend eine Handlungsempfehlung für das automatisiert fahrende Fahrzeug auf Grundlage der ermittelten typischen Eigenschaften des unbekannten Objektes mittels einer Empfehlungseinrichtung abgeleitet und in Verfahrensschritt 104 beispielsweise einer Steuerung des Fahrzeugs bereitgestellt.

Wurde eine Typikalität geschätzt, so wird die Handlungsempfehlung zusätzlich auf Grundlage der geschätzten Typikalität abgeleitet.

Anschließend ist das Verfahren beendet 105.

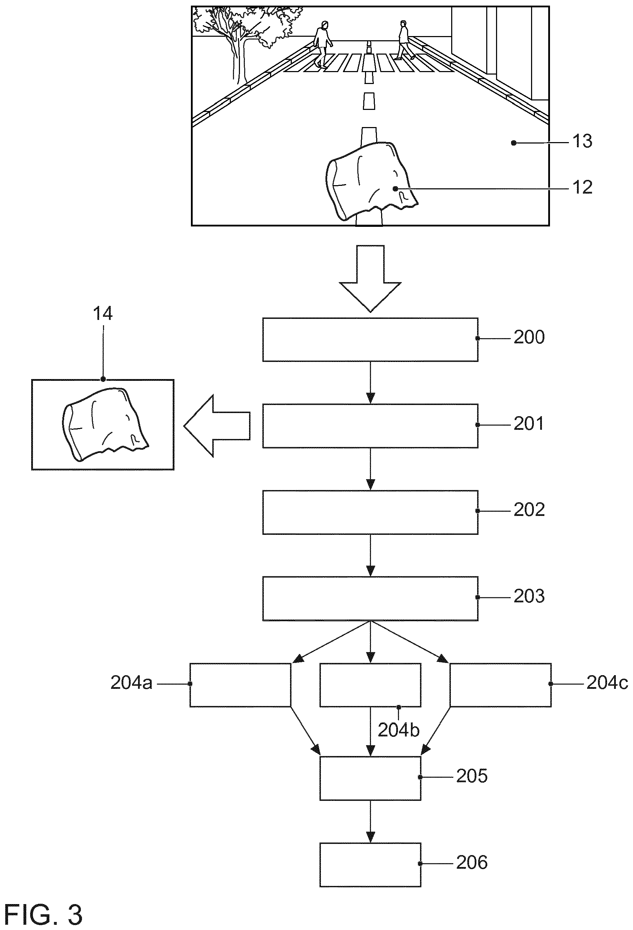

In Fig. 3 ist ein Ablaufbeispiel des Verfahrens zum Unterstützen einer automatisierten Fahrt eines Fahrzeugs gezeigt. In diesem Beispiel wird als unbekanntes Objekt 12 eine leere Plastiktüte betrachtet, welche vor einem Fahrzeug auf einer Fahrbahn 13 angetroffen wird.

In einem Verfahrensschritt 200 wird das unbekannte Objekt 12 im Umfeld des Fahrzeugs identifiziert, das heißt ein seltenes Ereignis ("corner case") wird festgestellt. Dies erfolgt mittels einer Objekterkennungseinrichtung. Im gezeigten Beispiel stellt die Objekterkennungseinrichtung zwar fest, dass im Umfeld ein Objekt vorhanden ist, jedoch erkennt die Objekterkennungseinrichtung das Objekt nicht als "Plastiktüte".

Im Verfahrensschritt 201 werden die zu dem unbekannten Objekt 12 zugehörigen Umfelddaten isoliert und der Rechercheeinrichtung zugeführt. Im gezeigten Beispiel ist dies ein zugehöriger Bildbereich 14, der das unbekannte Objekt 12, das heißt die Plastiktüte, umfasst.

Die Verfahrensschritte 200 und 201 können auch mittels einer hierfür ausgebildeten Erkennungseinrichtung ausgeführt werden.

Im Verfahrensschritt 202 wird das unbekannte Objekt auf Grundlage des zugehörigen Bildbereichs 14 in einer Bilddatenbank aufgesucht. Als Ergebnis liefert die Suche Bilder von Objekten, die dem unbekannten Objekt 12 bzw. dessen Bild ähnlich sind. Im gezeigten Beispiel sind dies Plastiktüten, welche der gezeigten Plastiktüte ähnlich sehen.

Im Verfahrensschritt 203 werden Metadaten aus den aufgefundenen Bildern der Bilddatenbank extrahiert. Die Metadaten umfassen insbesondere Begriffe, welche die jeweils in den Bildern abgebildeten Objekte beschreiben, das heißt Begriffe, die Plastiktüten, deren Umfeld oder deren optisches Erscheinungsbild in den Bildern beschreiben. Diese Begriffe können beispielsweise die folgenden umfassen: Plastiktüte, leer/befüllt, groß/klein, ein zugehöriges Logo, ein Umfeld etc.

Es kann vorgesehen sein, dass auf Grundlage der aus den Metadaten extrahierten Begriffe äquivalente Begriffe gesucht und hinzugefügt werden, sodass ein Begriffsnetz (engl. "wordnet") mit beschreibenden Begriffen vorliegt. Dies erfolgt beispielsweise mittels entsprechender Wörterbücher. Ein einfaches Beispiel wäre hierbei eine Übersetzung des Begriffs "Plastiktüte" in den englischen Begriff "plastic bag", um die Suchmöglichkeiten auch auf die englische Sprache ausdehnen zu können.

In einem Verfahrensschritt 204 werden anschließend typische Eigenschaften für die in der Bilddatenbank aufgefundenen Objekte und daher auch für das unbekannte Objekt 12 ermittelt.

Dies kann beispielsweise eine Suche in einer maschinenlesbaren Datenbank umfassen (Verfahrensschritt 204a), in der miteinander verlinkte Daten hinterlegt sind (z.B. auf Grundlage der Linked Open Data Initiative). Hierbei wird beispielsweise nach dem Begriff "Plastiktüte" gesucht und eine damit verlinkte Eigenschaft "Gewicht" sowie gegebenenfalls weitere Eigenschaften ermittelt.

Ferner kann dies auch eine Suche in einem Wissensbasierten System umfassen (Verfahrensschritt 204b). Als Wissensbasiertes System kann beispielsweise DBpedia verwendet werden. Auch hier wird entsprechend nach dem Begriff "Plastiktüte" in Zusammenhang mit zugehörigen Eigenschaften gesucht und die jeweilige Eigenschaft aus dem Ergebnis extrahiert.

Ferner kann das Ermitteln auch eine Suche in unstrukturierten Daten umfassen (Verfahrensschritt 204c), beispielsweise in einem unstrukturierten Dokument. Unstrukturierte Dokumente werden beispielsweise auf Webseiten des Internets bereitgestellt. Auch hier wird nach dem Begriff "Plastiktüte" in Zusammenhang mit üblicherweise verwendeten Sprachmustern, die einem Substantiv Eigenschaften zuordnen oder dieses charakterisieren, wie z.B. "...Plastiktüte hat..." oder "...Plastiktüte ist..." etc., gesucht und die jeweilige Eigenschaft aus dem Ergebnis extrahiert.

Im Verfahrensschritt 205 werden aus den jeweiligen Suchergebnissen die typischen Eigenschaften zusammengeführt. Insbesondere werden hierbei relevante Eigenschaften gesammelt und mit einer Wahrscheinlichkeit bewertet. Das Ergebnis liefert physikalische Eigenschaften, wie beispielsweise eine Masse/Gewicht, eine Größe und ein Material etc., die das unbekannte Objekt mit der größten Wahrscheinlichkeit besitzt.

In Verfahrensschritt 206 wird eine Handlungsempfehlung für das automatisiert fahrende Fahrzeug auf Grundlage der typischen Eigenschaften des unbekannten Objektes 12 mittels einer Empfehlungseinrichtung abgeleitet und bereitgestellt. Im Falle der im Beispiel gezeigten Plastiktüte auf der Fahrbahn vor dem Fahrzeug kann eine Handlungsempfehlung - in die Alltagssprache übersetzt - beispielsweise lauten: "Fahre mit einer Geschwindigkeit von 36 km/h über die Plastiktüte hinweg".

### Bezugszeichenliste

- 1: System
- 2: Rechercheeinrichtung
- 3: Empfehlungseinrichtung
- 4: Datenbank
- 5: Bilddatenbank
- 6: Suchergebnis
- 7: maschinenlesbare Datenbank
- 8: Wissensbasiertes System
- 9: unstrukturierte Daten
- 10: typische Eigenschaften
- 11: Metadaten
- 12: unbekanntes Objekt
- 13: Fahrbahn
- 14: Bildbereich
- 20: Sensorik
- 21: Umfelddaten
- 22: Objekterkennungseinrichtung
- 23: zugehörige Umfelddaten
- 24: Handlungsempfehlung
- 25: Steuerung
- 100-105: Verfahrensschritte
- 200-206: Verfahrensschritte

## Patentansprüche

1. Verfahren zum Unterstützen eines automatisiert fahrenden Fahrzeugs, wobei Objekte in einem Umfeld des Fahrzeugs mittels einer Sensorik (20) erfasst werden, und wobei in erfassten Umfelddaten (21) Objekte mittels einer Objekterkennungseinrichtung (22) identifiziert und erkannt werden, wobei das Identifizieren eines Objektes das Feststellen eines Objektes im Umfeld bedeutet, wobei bei Vorliegen eines unbekannten Objektes (12) im Umfeld, das heißt eines im Umfeld festgestellten Objekts (12), das jedoch von der Objekterkennungseinrichtung (22) nicht erkannt wurde, die folgenden Schritte ausgeführt werden:
(a) Aufsuchen des unbekannten Objektes (12) in mindestens einer Datenbank (4) mittels einer Rechercheeinrichtung (2),
(b) Ermitteln von typischen Eigenschaften (10) des unbekannten Objektes (12) auf Grundlage des Suchergebnisses (6) mittels der Rechercheeinrichtung (2), wobei typische Eigenschaften (10) physikalische Eigenschaften des unbekannten Objektes sind, und wobei die typischen Eigenschaften (10) durch Suchen oder Abfragen aus einer Datenbank ermittelt werden,
(c) Ableiten einer Handlungsempfehlung (24) für das automatisiert fahrende Fahrzeug auf Grundlage der typischen Eigenschaften (10) des unbekannten Objektes (12) mittels einer Empfehlungseinrichtung (3),
(d) Bereitstellen der abgeleiteten Handlungsempfehlung (24),
**dadurch gekennzeichnet, dass** das Aufsuchen des unbekannten Objektes (12) auf Grundlage bildbasierter Umfelddaten (21) in einer Bilddatenbank (5) durchgeführt wird.

2. Verfahren nach Anspruch 1, **dadurch gekennzeichnet, dass** das Aufsuchen ein Extrahieren von Metadaten (11) auf Grundlage des aus der Bilddatenbank (5) bereitgestellten Suchergebnisses (6) umfasst.

3. Verfahren nach Anspruch 2, **dadurch gekennzeichnet, dass** auf Grundlage der extrahierten Metadaten (11) ein das unbekannte Objekt (12) beschreibendes Begriffsnetz erstellt wird, wobei das Begriffsnetz ein Wordnet ist.

4. Verfahren nach einem der vorangegangenen Ansprüche, **dadurch gekennzeichnet, dass** das Ermitteln der typischen Eigenschaften (10) eine Suche in einer maschinenlesbaren Datenbank (7) umfasst, in der miteinander verlinkte Daten hinterlegt sind.

5. Verfahren nach einem der vorangegangenen Ansprüche, **dadurch gekennzeichnet, dass** das Ermitteln der typischen Eigenschaften (10) eine Suche in einem Wissensbasierten System (8) umfasst.

6. Verfahren nach einem der vorangegangenen Ansprüche, **dadurch gekennzeichnet, dass** das Ermitteln der typischen Eigenschaften (10) eine Suche in unstrukturierten Daten (9) umfasst.

7. Verfahren nach einem der vorangegangenen Ansprüche, **dadurch gekennzeichnet, dass** das Ermitteln der typischen Eigenschaften (10) auf Grundlage von vorgegebenen relevanten Eigenschaften erfolgt, wobei relevante Eigenschaften physikalische Eigenschaften sind, die im Hinblick auf einen Kontakt oder eine Kollision des unbekannten Objekts mit dem Fahrzeug zu beachten sind, umfassend zumindest eine der folgenden: ein Gewicht, eine Größe, ein Material, eine Verformbarkeit.

8. Verfahren nach einem der vorangegangenen Ansprüche, **dadurch gekennzeichnet, dass** beim Ermitteln der typischen Eigenschaften (10) eine Typikalität für das unbekannte Objekt (12) in Bezug auf die typischen Eigenschaften (10) geschätzt wird, wobei die Typikalität ein Maß dafür ist, wie gut ein Mitglied einer Kategorie diese Kategorie repräsentiert, und in Form einer Wahrscheinlichkeit ausgedrückt wird, und wobei die Handlungsempfehlung (24) zusätzlich auf Grundlage der geschätzten Typikalität abgeleitet wird.

9. System (1) zum Unterstützen einer automatisierten Fahrt eines Fahrzeugs, wobei Objekte in einem Umfeld des Fahrzeugs mittels einer Sensorik (20) des Systems (1) oder des Fahrzeugs erfasst werden, und wobei in erfassten Umfelddaten (21) Objekte mittels einer Objekterkennungseinrichtung (22) des Systems (1) oder des Fahrzeugs identifiziert und erkannt werden, umfassend:
eine Rechercheeinrichtung (2) und
eine Empfehlungseinrichtung (3),
wobei die Rechercheeinrichtung (2) derart ausgebildet ist, bei Vorliegen eines unbekannten Objektes (12) im Umfeld, das heißt eines im Umfeld festgestellten Objekts (12), das jedoch von der Objekterkennungseinrichtung (22) nicht erkannt wurde, das unbekannte Objekt (12) in mindestens einer Datenbank (4) aufzusuchen, und typische Eigenschaften (10) des unbekannten Objektes (12) auf Grundlage des Suchergebnisses (6) zu ermitteln, wobei typische Eigenschaften (10) physikalische Eigenschaften des unbekannten Objektes sind, und wobei die Rechercheeinrichtung (2) derart ausgebildet ist, die typischen Eigenschaften (10) durch Suchen oder Abfragen aus einer Datenbank zu ermitteln, und wobei die Empfehlungseinrichtung (3) derart ausgebildet ist, eine Handlungsempfehlung (24) für das automatisiert fahrende Fahrzeug auf Grundlage der typischen Eigenschaften (10) abzuleiten und bereitzustellen,
**dadurch gekennzeichnet, dass** das Aufsuchen des unbekannten Objektes (12) auf Grundlage bildbasierter Umfelddaten (21) in einer Bilddatenbank (5) durchgeführt wird.

## Claims

1. Method for assisting a vehicle driving in an automated manner, wherein objects in an environment of the vehicle are captured using a sensor system (20), and wherein objects in captured environmental data (21) are identified and recognized by means of an object recognition device (22), wherein the identification of an object means detecting an object in the environment, wherein the following steps are carried out when there is an unknown object (12) in the environment, that is to say an object (12) which has been detected in the environment but has not been recognized by the object recognition device (22):
(a) searching for the unknown object (12) in at least one database (4) by means of a searching device (2),
(b) determining typical properties (10) of the unknown object (12) on the basis of the search result (6) by means of the searching device (2), wherein typical properties (10) are physical properties of the unknown object, and wherein the typical properties (10) are determined by searching or querying a database,
(c) deriving a recommended action (24) for the vehicle driving in an automated manner on the basis of the typical properties (10) of the unknown object (12) by means of a recommendation device (3),
(d) providing the derived recommended action (24), **characterized in that** the unknown object (12) is searched for on the basis of image-based environmental data (21) in an image database (5).

2. Method according to Claim 1, **characterized in that** the searching comprises extracting meta data (11) on the basis of the search result (6) provided from the image database (5).

3. Method according to Claim 2, **characterized in that** a term network describing the unknown object (12) is created on the basis of the extracted meta data (11), wherein the term network is WordNet.

4. Method according to one of the preceding claims, **characterized in that** the determination of the typical properties (10) comprises a search in a machine-readable database (7) which stores data that are linked to one another.

5. Method according to one of the preceding claims, **characterized in that** the determination of the typical properties (10) comprises a search in a knowledge-based system (8).

6. Method according to one of the preceding claims, **characterized in that** the determination of the typical properties (10) comprises a search in unstructured data (9) .

7. Method according to one of the preceding claims, **characterized in that** the typical properties (10) are determined on the basis of predefined relevant properties, wherein relevant properties are physical properties which should be noted with respect to contact or a collision between the unknown object and the vehicle, comprising at least one of the following: a weight, a size, a material, a deformability.

8. Method according to one of the preceding claims, **characterized in that**, when determining the typical properties (10), a typicality for the unknown object (12) with respect to the typical properties (10) is estimated, wherein the typicality is a measure of how well a member of a category represents this category and is expressed in the form of a probability, and wherein the recommended action (24) is additionally derived on the basis of the estimated typicality.

9. System (1) for assisting with an automated journey of a vehicle, wherein objects in an environment of the vehicle are captured using a sensor system (20) of the system (1) or of the vehicle, and wherein objects in captured environmental data (21) are identified and recognized by means of an object recognition device (22) of the system (1) or of the vehicle, comprising:
a searching device (2) and
a recommendation device (3),
wherein the searching device (2) is designed, if there is an unknown object (12) in the environment, that is to say an object (12) which has been detected in the environment but has not been recognized by the object recognition device (22), to search for the unknown object (12) in at least one database (4) and to determine typical properties (10) of the unknown object (12) on the basis of the search result (6), wherein typical properties (10) are physical properties of the unknown object, and wherein the searching device (2) is designed to determine the typical properties (10) by searching or querying a database, and wherein the recommendation device (3) is designed to derive and provide a recommended action (24) for the vehicle driving in an automated manner on the basis of the typical properties (10),
**characterized in that** the unknown object (12) is searched for on the basis of image-based environmental data (21) in an image database (5).

## Revendications

1. Procédé d'assistance à un véhicule automatisé, des objets étant détectés dans un environnement du véhicule au moyen d'un moyen de détection (20), et des objets étant identifiés et reconnus dans des données environnementales acquises (21) au moyen d'un dispositif de reconnaissance d'objets (22), l'identification d'un objet signifiant la constatation d'un objet dans l'environnement, les étapes suivantes étant exécutées si un objet inconnu (12) est présent dans l'environnement, c'est-à-dire si un objet (12) est constaté dans l'environnement mais n'a pas été reconnu par le dispositif de reconnaissance d'objets (22) :
(a)rechercher l'objet inconnu (12) dans au moins une base de données (4) à l'aide d'un dispositif de recherche (2),
(b)déterminer des propriétés typiques (10) de l'objet inconnu (12) sur la base du résultat de recherche (6) à l'aide du dispositif de recherche (2), les propriétés typiques (10) étant des propriétés physiques de l'objet inconnu, et les propriétés typiques (10) étant déterminées par recherche ou interrogation à partir d'une base de données,
(c)déduire une recommandation d'action (24) pour le véhicule automatisé sur la base des propriétés typiques (10) de l'objet inconnu (12) à l'aide d'un dispositif de recommandation (3),
(d)fournir la recommandation d'action déduite (24),
**caractérisé en ce que** la recherche de l'objet inconnu (12) est effectuée sur la base de données d'environnement à base d'images (21) dans une base de données d'images (5).

2. Procédé selon la revendication 1, **caractérisé en ce que** la recherche comprend l'extraction de métadonnées (11) sur la base du résultat de recherche (6) fourni par la base de données d'images (5).

3. Procédé selon la revendication 2, **caractérisé en ce qu'**un réseau conceptuel décrivant l'objet inconnu (12) est créé à partir des métadonnées extraites (11), le réseau conceptuel étant un Wordnet.

4. Procédé selon l'une des revendications précédentes, **caractérisé en ce que** la détermination des propriétés typiques (10) comprend une recherche dans une base de données (7) lisible par machine dans laquelle des données liées entre elles sont mémorisées.

5. Procédé selon l'une des revendications précédentes, **caractérisé en ce que** la détermination des propriétés typiques (10) comprend une recherche dans un système (8) basé sur la connaissance.

6. Procédé selon l'une des revendications précédentes, **caractérisé en ce que** la détermination des propriétés typiques (10) comprend une recherche dans des données non structurées (9).

7. Procédé selon l'une des revendications précédentes, **caractérisé en ce que** la détermination des propriétés typiques (10) est effectuée sur la base de propriétés pertinentes spécifiées, les propriétés pertinentes étant des propriétés physiques à prendre en compte en ce qui concerne un contact ou une collision de l'objet inconnu avec le véhicule, lesquelles comprennent au moins l'un des éléments suivants : le poids, la dimension, le matériau, la déformabilité.

8. Procédé selon l'une des revendications précédentes, **caractérisé en ce que**, lors de la détermination des propriétés typiques (10), une typicité de l'objet inconnu (12) est estimée par rapport aux propriétés typiques (10), la typicité étant une mesure de la façon dont un membre d'une catégorie représente cette catégorie et étant exprimée en termes de probabilité, et la recommandation d'action étant également déduite sur la base de la typicité estimée.

9. Système (1) d'assistance à la conduite automatisée d'un véhicule, des objets étant détectés dans un environnement du véhicule au moyen d'un moyen de détection (20) du système (1) ou du véhicule, et des objets étant identifiés et reconnus dans des données d'environnement acquises (21) au moyen d'un dispositif de reconnaissance d'objets (22) du système (1) ou du véhicule, ledit système comprenant :
un dispositif de recherche (2) et
un dispositif de recommandation (3),
le dispositif de recherche (2) étant conçu de manière à ce que, si un objet inconnu (12) est présent dans l'environnement, c'est-à-dire si un objet (12) est constaté dans l'environnement mais n'est pas reconnu par le dispositif de reconnaissance d'objets (22), l'objet inconnu (12) soit recherché dans au moins une base de données (4) et les propriétés typiques (10) de l'objet inconnu (12) soient déterminées sur la base du résultat de recherche (6), les propriétés typiques (10) étant les propriétés physiques de l'objet inconnu, et le dispositif de recherche (2) étant conçu pour déterminer les propriétés typiques (10) par recherche ou interrogation à partir d'une base de données, et le dispositif de recommandation (3) étant conçu pour déduire et fournir une recommandation d'action (24) pour le véhicule automatisé sur la base des propriétés typiques (10), **caractérisé en ce que** la recherche de l'objet inconnu (12) est effectuée sur la base de données d'environnement (21) à base d'images dans une base de données d'images (5).
